# EUROPEAN PATENT SPECIFICATION

(11) **EP 4 112 501 B1**
(45) Date of publication and mention of the grant of the patent: **26.02.2025**
(21) Application number: 21760743.1
(22) Date of filing: 09.02.2021
(51) Int. Cl.: B65G 1/04, G05D 1/225, G05D 1/226, G05D 1/698, G05D 105/28, G05D 107/70, G05D 109/10

(54) **CONTROL DEVICE AND CONVEYING SYSTEM**
STEUERUNGSVORRICHTUNG UND FÖRDERSYSTEM
DISPOSITIF DE COMMANDE ET SYSTÈME DE TRANSPORT

(30) Priority: 28.02.2020 JP 2020034048
(43) Date of publication of application: 04.01.2023
(73) Proprietor: OMRON Corporation, Kyoto-shi, Kyoto 600-8530 (JP)
(72) Inventor: OSHIRO, Atsushi, Kyoto-shi, Kyoto 600-8530 (JP); MANOME, Tomonori, Kyoto-shi, Kyoto 604-8152 (JP)
(74) Representative: Becker, Eberhard
(86) International application number: PCT/JP2021/004691
(87) International publication number: WO 2021/171996

(56) References cited:
- WO-A1-2012/144068
- DE-A1- 102017 119 578
- JP-A- 2015 213 318
- JP-A- 2019 134 148
- US-A1- 2017 126 372
- US-A1- 2017 182 664
- US-A1- 2018 210 460
- US-A1- 2019 354 111
- US-A1- 2020 050 185

## Description

### Technical Field

The present invention relates to a control device for controlling a conveyance robot and a conveying system including the same.

### Related Art

Self-propelled conveyance robots such as automated guided vehicles (AGVs) and automated guided forklifts (AGFs) used in factories, warehouses, etc. have been proposed. A plurality of such conveyance robots are controlled by a control device through wireless communication to form a conveying system that realizes automation of conveyance in factories, etc.

### Citation List

### Patent Literature

[Patent Literature 1] Japanese Patent Laid-Open No. 2019-48689

US 2020/050185 A1 relates to an information processing method of an information processing apparatus for remotely operating a vehicle via a communication network. DE 102017119578 A1 relates to a method for transmitting data between the central control apparatus and a plurality of decentralized devices. US 2017/126372 A1 relates to a method for communicating multimedia data between two devices over a network. US 2019/354111 A1 relates to a method for dynamically querying a remote operator for assistance. US 2018/210460 A1 relates to a method to simultaneously control a plurality of autonomous vehicles. US 2017/182664 A1 relates to systems and methods are disclosed for limiting capabilities of a robot during teleoperation based on a network connection strength.

### SUMMARY OF INVENTION

### Technical Problem

The control device appropriately assigns conveyance instructions to the plurality of conveyance robots to realize the desired conveyance work. However, in a conveying system such as a factory or a warehouse, a large number of conveyance robots are usually deployed in order to handle a large number of conveyed objects. These conveyance robots may be in various states, and even if the control device transmits a conveyance instruction to a specific conveyance robot, a response may not be returned. The cause may be a problem in communication quality or a problem inherent in the conveyance robot itself.

However, in the past, it has not been clearly considered whether the cause is a problem in communication quality or a problem inherent in the conveyance robot, and regarding the issuance of instructions to the conveyance robot, no measures were taken in consideration of this point. The present invention has been made in view of such circumstances on one aspect, and an object of the present invention is to realize a control device of a conveying system that can evaluate the quality of communication between the control device and the conveyance robot in a mode suitable for the conveying system, thereby optimizing the assignment of conveyance instructions.

### Solution to Problem

The invention is set out in the appended set of claims. The following disclosure serves a better understanding of the present invention. The present invention adopts the following configuration in order to solve the above-mentioned problems. The control device according to one aspect of the present invention is a control device for controlling a conveyance robot. The control device includes: a master communication unit that performs wireless communication with the conveyance robot; a communication quality determination unit that determines quality of the wireless communication based on a communication state of a telegram generated by the conveyance robot, which is received by the master communication unit; and an instruction state determination unit that determines an instruction state regarding whether to transmit an instruction for controlling the conveyance robot depending on the quality of the wireless communication.

### Effects of Invention

According to the control device according to one aspect of the present invention, it is possible to realize a control device that can evaluate the quality of communication between the control device and the conveyance robot in a mode suitable for the conveying system, thereby optimizing the assignment of conveyance instructions.

### BRIEF DESCRIPTION OF DRAWINGS

FIG. 1 is a floor map schematically showing an example of a factory into which a conveying system including a control device according to an application example of the present invention is introduced.
FIG. 2 is a block diagram showing configurations of a control device according to the first embodiment of the present invention and a conveying system including the same.
FIG. 3 is a table for illustrating an operation of a quality classification unit in a control device according to the second embodiment of the present invention in comparison with the case of the control device according to the first embodiment.

### DESCRIPTION OF EMBODIMENTS

Hereinafter, embodiments according to one aspect of the present invention will be described with reference to the drawings.

### 1. Application example

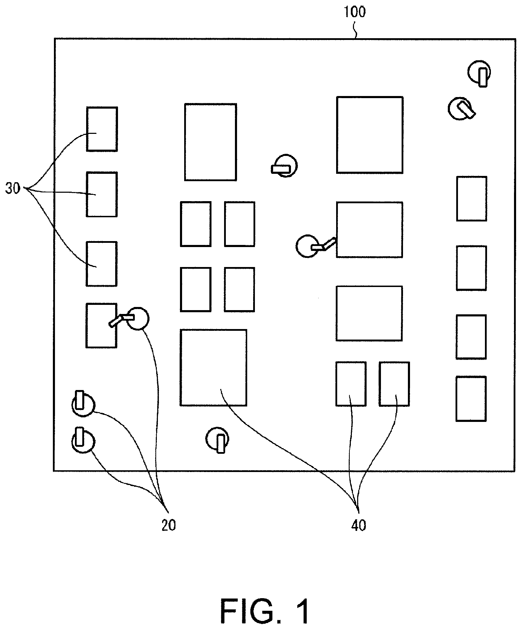

An example of a situation to which the present invention is applied will be described with reference to FIG. 1. FIG. 1 is a diagram schematically showing a floor map of a factory 100, which is an example of an area such as a factory or a warehouse to which a conveying system including a control device according to this application example can be applied.

The factory 100 is equipped with a conveyance robot 20 for conveying the conveyed objects such as products, semi-finished products, parts, tools, jigs, packing materials, and cassettes for storing these. As an example, the conveyance robot 20 is a self-propelled conveyance robot provided with a robot arm (manipulator) for gripping the conveyed object. However, the conveyance robot 20 may be an automated guided vehicle, an AGF or a self-propelled conveyance device in other forms.

A shelf 30 on which the conveyed object can be placed is installed in the factory 100. Further, a production facility that applies required processing such as assembly, machining, assembling, and inspection to place the conveyed object in a predetermined pick-up port when placing the conveyed object in a predetermined receiving port is also installed in the factory 100. Depending on the production facility, the receiving port and the pick-up port may be shared.

The conveyance robot 20 of the conveying system that includes the control device according to this application example can convey the conveyed object between these facilities. The conveyance robot 20 is provided with a telegram generator that generates a telegram, and a slave communication unit. The control device according to this application example is not shown in the floor map of FIG. 1. The control device according to this application example is provided with a master communication unit that performs wireless communication with the slave communication unit of the conveyance robot 20.

The control device according to this application example is further provided with a communication quality determination unit that determines the quality of wireless communication based on a communication state of the telegram received by the master communication unit. In addition, the control device according to this application example is provided with an instruction state determination unit that changes an instruction state regarding whether to transmit an instruction for controlling the conveyance robot depending on the quality of wireless communication.

In the control device according to this application example, the quality of communication between the control device and the conveyance robot 20 is evaluated based on the communication state of the telegram transmitted from the side of the conveyance robot 20 to the control device. Such a telegram may be a report for the conveyance robot 20 to notify the control device of the state, which is necessary for the control device to grasp the condition of each conveyance robot 20 and then assign a job.

Accordingly, the quality of communication can be evaluated by the state of communication actually performed by the control device and the conveyance robot for control, regardless of physical parameters such as wireless radio wave strength and physical communication speed. Therefore, such a communication quality evaluation method is suitable as an evaluation scale for allowing the control device to appropriately control the conveyance robot 20.

Further, in the control device according to this application example, the quality of communication between the control device and the conveyance robot 20 is evaluated, and based on the result, the instruction state regarding whether to transmit an instruction for controlling the conveyance robot is changed. Thus, the evaluation related to the quality of communication is performed separately from the problem inherent in the conveyance robot 20 to change the instruction state, so the conveying system can be operated appropriately.

### 2. Configuration example

### [First embodiment]

### <Overview of the conveying system>

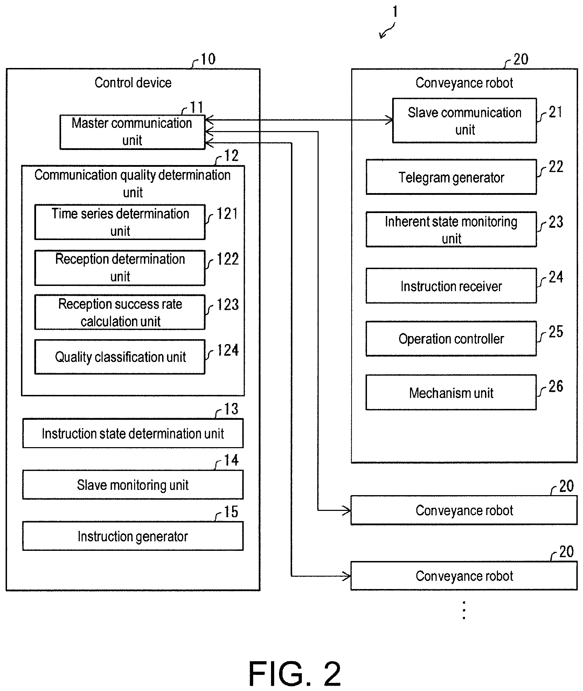

Hereinafter, more specific configuration examples and operations of the control device and the conveying system will be described. FIG. 2 is a block diagram showing configurations of a control device 10 according to the first embodiment and a conveying system 1 including the same. The conveying system 1 includes the control device 10 and a conveyance robot 20. In FIG. 2, the configuration of one unit of the conveyance robot 20 is shown in detail, but the other units also have the same internal configuration.

The control device 10 is an information processing system that manages conveyance, which is sometimes called by a name such as a conveying system server (AMHS server: Automated Material Handling System Server). The control device 10 transmits a more specific conveyance instruction to the conveyance robot 20 in the conveying system 1 based on a command from a host information processing system or the like. The control device 10 may be an information processing system capable of executing such processing, and does not need to be a device physically contained in one housing.

When the scene to which the conveying system 1 is applied is a production factory, the host information processing system that manages the production of products in the production factory may be referred to as a manufacturing execution system server (MES server). When the scene to which the conveying system 1 is applied is a distribution warehouse, the host information processing system that manages the receipt and delivery of stored items in the distribution warehouse may be referred to as a warehouse management system server (WMS server).

### <Configuration of the conveyance robot>

As shown in FIG. 2, the conveyance robot 20 is provided with a slave communication unit 21, a telegram generator 22, an inherent state monitoring unit 23, an instruction receiver 24, an operation controller 25, and a mechanism unit 26. The slave communication unit 21 is a communication interface that executes wireless communication with the control device 10.

The telegram generator 22 is a functional block that generates a telegram including information of the inherent state of the conveyance robot 20 for reporting to the control device 10 and notifies the control device 10 through the slave communication unit 21. The inherent state monitoring unit 23 is a functional block that acquires the inherent state of the conveyance robot 20. Here, the inherent state of the conveyance robot 20 refers to a state related to the individual conveyance robot itself, and for example, refers to a state related to the operation of the conveyance robot 20 and other internal states such as the current position, the state of operation, the state of loading of the conveyed object, and the remaining battery level.

The instruction receiver 24 is a functional block that receives an instruction regarding conveyance from the control device 10 to the conveyance robot 20 through the slave communication unit 21. The operation controller 25 is a functional block that controls the mechanism unit 26 based on the instruction received by the instruction receiver 24 and causes the conveyance robot 20 to execute a required operation.

The mechanism unit 26 is a mechanism for the conveyance robot 20 to execute the conveyance operation. The mechanism unit 26 includes at least a traveling mechanism for the conveyance robot 20 to move. Further, the mechanism unit 26 may have a mechanism such as a robot arm for picking up or placing the conveyed object.

### <Configuration of the control device>

As shown in FIG. 2, the control device 10 is provided with a master communication unit 11, a communication quality determination unit 12, an instruction state determination unit 13, a slave monitoring unit 14, and an instruction generator 15. The master communication unit 11 is a communication interface that realizes wireless communication with a plurality of conveyance robots 20.

The communication quality determination unit 12 is a functional block that determines the quality of wireless communication with the conveyance robot 20 based on the communication state of the telegram from the conveyance robot 20, which is received by the master communication unit 11. The communication quality determination unit 12 includes a time series determination unit 121, a reception determination unit 122, a reception success rate calculation unit 123, and a quality classification unit 124. The functions and operations of each of these units will be described later.

The instruction state determination unit 13 is a functional block that changes the instruction state regarding whether to transmit an instruction for controlling the conveyance robot based on the determination result of the quality of wireless communication obtained by the communication quality determination unit 12. The slave monitoring unit 14 is a functional block that monitors the inherent state of the conveyance robot 20 in the conveying system 1. The slave monitoring unit 14 monitors the inherent state of the conveyance robot 20 at least based on the content of the telegram from the conveyance robot 20 received by the master communication unit 11.

The instruction generator 15 assigns a job regarding conveyance of the conveyed object in consideration of the inherent state of each conveyance robot 20 acquired by the slave monitoring unit 14 to the conveyance robot 20 in the conveying system 1 based on a command from the host information processing system or the like. Further, the instruction generator 15 generates an instruction such as conveyance to the conveyance robot 20 to which the job is assigned, and transmits the instruction through the master communication unit 11.

At that time, the instruction generator 15 also considers the instruction state determined by the instruction state determination unit 13 to execute assignment of a job regarding conveyance of the conveyed object and transmission of an instruction such as conveyance to the conveyance robot 20. The details will be described later. Here, the following is given as an example of assigning a job in consideration of the inherent state of the conveyance robot 20.

For example, when a certain conveyed object is to be moved, the job is assigned to the conveyance robot 20 whose operation state is not in the process of executing a job and is located near the place where the conveyed object is placed. Alternatively, the job is assigned by selecting the conveyance robot 20 having a sufficient battery level for conveyance.

### <Operation of the conveying system>

Hereinafter, the characteristic operations of the control device 10 and the conveying system 1 according to the first embodiment will be described in detail. The telegram generator 22 of the conveyance robot 20 creates a telegram including the information of the inherent state of the conveyance robot 20 acquired by the inherent state monitoring unit 23 and time series information. At that time, the telegram may further include information regarding the radio wave strength of the wireless communication with the control device 10. The time series information may be information of time or may be the order in which the telegram is created. In the specific example of the first embodiment, it is assumed that the time series information is the information of time.

The telegram generator 22 periodically generates the above-mentioned telegram in order to sequentially transmit the inherent state of the conveyance robot 20 to the control device 10. The slave communication unit 21 of the conveyance robot 20 transmits the telegram as a telegram with an error correction code (so-called checksum) to the control device. A known method can be appropriately applied as error correction. For example, HMAC-SHA256 (Hash-based Message Authentication Code - Secure Hash Algorithm 256-bit) may be used as the error correction method.

When the master communication unit 11 of the control device 10 receives the telegram from the specific conveyance robot 20, the master communication unit 11 determines whether the received telegram has an error due to communication based on the error correction method and extracts the content of the telegram. Error correction may be executed if there is an error when extracting the content of the telegram. The content of the telegram is acquired by the slave monitoring unit 14. The time series determination unit 121 refers to the time series information of the telegram sequentially transmitted from the specific conveyance robot 20, and determines whether there is a telegram with time series of the received telegram different from the arrival time series.

The reception determination unit 122 determines whether the reception is successful based on the determination result of the time series determination unit 121 and the determination result of whether there is an error obtained by the master communication unit 11 for a certain telegram. The determination as to whether the reception is successful is that if there is no telegram with time series different from the arrival time series and there is no error, the reception is successful; otherwise, it is not successful.

The reception determination unit 122 counts the number of telegrams whose reception is successful within a predetermined period. It is also possible to determine whether the reception is successful only by the determination result of the time series determination unit 121. Alternatively, it is also possible to determine only by the determination result of whether there is an error obtained by the master communication unit 11.

The reception success rate calculation unit 123 calculates the reception success rate from the ratio of the number of telegrams received from the specific conveyance robot 20 to the number of telegrams successfully received within the predetermined period. Further, the reception success rate calculation unit 123 may also calculate the reception success rate by including determination as to whether a time difference between the time (time series information) of creating the telegram included in the telegram and the reception time of the telegram is within a predetermined time. Furthermore, the reception success rate calculation unit 123 may also calculate the reception success rate by including determination as to whether the radio wave strength of the information regarding the radio wave strength of the wireless communication with the control device 10 included in the telegram is equal to or greater than a predetermined value.

The quality classification unit 124 classifies and determines the communication quality according to the value of the reception success rate calculated by the reception success rate calculation unit 123 for each predetermined period. The classification of communication quality, for example, classifies a case where the reception success rate is equal to or greater than a first threshold value as a first category, a case where the reception success rate is equal to or less than a second threshold value as a third category, and a case between these as a second category.

Further, as an example, the first threshold value can be 70% and the second threshold value can be 30%. However, these threshold values are examples and are appropriately set according to the conveying system. As described above, the communication quality determination unit 12 determines the quality of communication according to the communication state of the telegram from the conveyance robot 20 received by the master communication unit 11.

Next, the instruction state determination unit 13 of the control device 10 determines the instruction state of the control device 10 according to the quality of communication determined by the quality classification unit 124 of the communication quality determination unit 12. The instruction state can be set to three states, for example, active (first state), pending (second state), and dead (third state) according to the first category, the second category, and the third category, respectively.

Active corresponds to a state considered to be a quality condition of communication in which the conveyance robot 20 can immediately receive an instruction such as conveyance. The control device 10 can execute the instruction to the conveyance robot 20 when the instruction state is active. That is, the instruction is permitted. Dead corresponds to a state considered to be a quality condition of communication in which the conveyance robot 20 cannot receive an instruction such as conveyance. The control device 10 does not execute the instruction to the conveyance robot 20 when the instruction state is dead. Further, when a response of the instruction to the conveyance robot 20 is not obtained, the job regarding the instruction is reassigned to another machine and the instruction is reissued.

Pending corresponds to a state considered to be an intermediate communication quality condition between active and dead. The control device 10 stands by for an instruction to the conveyance robot 20 when the instruction state is dead. Then, if the instruction state changes to active and the instruction can be made, the instruction of the conveyance robot 20 is executed, and if the instruction state changes to dead, the job is reassigned to another machine.

The instruction generator 15 assigns a job to a large number of conveyance robots 20 in the conveying system 1 according to the above-mentioned instruction state, and transmits an instruction to a specific conveyance robot 20. Therefore, in the control device 10 of the first embodiment, it is possible to optimize the assignment of the conveyance instruction and the timing of the instruction based on the quality of communication between the control device 10 and the conveyance robot 20.

In particular, in the conveying system 1, the above-mentioned pending state is provided between the instructable active instruction state and the non-instructable dead instruction state. Therefore, unnecessary operations in the conveying system, for example, job reassignment is repeated more than required or multiple conveyance robots 20 try to execute duplicate instructions, are suppressed.

In addition, the evaluation of the quality of communication is performed depending on the state of communication actually performed between the control device 10 and the conveyance robot 20 for control, regardless of physical parameters such as wireless radio wave strength and physical communication speed. Therefore, such a communication quality evaluation method is suitable as an evaluation scale for allowing the control device to appropriately control the conveyance robot 20.

### [Second embodiment]

Other embodiments of the present invention will be described below. For convenience of explanation, the same reference numerals are given to members having the same functions as the members described in the above embodiment, and the description thereof will not be repeated.

The control device 10 and the conveying system 1 according to the second embodiment have the same configurations as those of the first embodiment and operate in the same manner except that the operation of the quality classification unit 124 is different from that of the first embodiment. In the control device 10 according to the first embodiment, the quality classification unit 124 classifies and determines the communication quality according to the value of the reception success rate calculated by the reception success rate calculation unit 123. At that time, the quality classification unit 124 classifies the communication quality for each predetermined period according to the reception success rate in the period (current time).

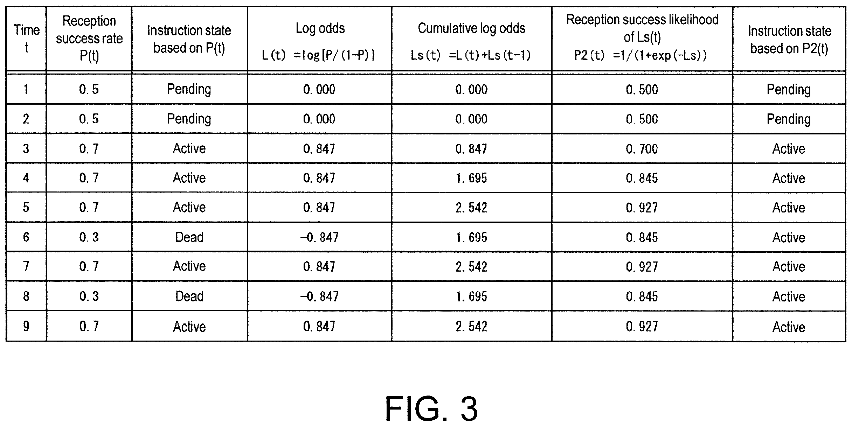

FIG. 3 is a table for illustrating the operation result of the quality classification unit 124 of each of the first embodiment and the second embodiment in a specific example of the reception success rate. An example of the reception success rate P(t) calculated by the quality classification unit 124 at each time t is shown in the second column. The instruction state in the case of the first embodiment, in which the communication quality is classified based on the reception success rate P(t) at the time t, is shown in the third column. In the case of the first embodiment, if the reception success rate P(t) fluctuates greatly from time to time, such as time t = 5 and thereafter, a situation in which the instruction state fluctuates between active and dead may occur.

On the contrary, in the control device 10 according to the second embodiment, the quality classification unit 124 of the communication quality determination unit 12 classifies and determines the communication quality by reflecting not only the reception success rate in the period (current time) but also the past reception success rate. The quality classification unit 124 of the second embodiment classifies the communication quality as follows based on the reception success rate.

The log odds L(t) obtained by converting the reception success rate P(t) at the time t by a logit function are calculated (the fourth column in FIG. 3). Next, the cumulative log odds Ls(t), which are the accumulation of the log odds L(t) from the past to the time t with the initial value set to 0, are calculated (the fifth column in FIG. 3). The reception success likelihood P2(t) obtained by converting the cumulative log odds Ls(t) by the inverse function of the logit function is calculated (the sixth column in FIG. 3). Then, the communication quality is classified depending on the value of the reception success likelihood P2(t) (the seventh column in FIG. 3) instead of the reception success rate P(t) in the case of the first embodiment.

When the communication quality is classified by the method of the second embodiment, the classification is made by reflecting the past values of the reception success rate. Therefore, even if the reception success rate P(t) fluctuates greatly from time to time, the fluctuation of the instruction state is suppressed. In the case of the second embodiment, even if the reception success rate P(t) fluctuates greatly from time to time, such as time t = 5 and thereafter in FIG. 3, the situation in which the instruction state fluctuates between active and dead is unlikely to occur. Accordingly, according to the control device 10 of the second embodiment, the job assignment and instruction can be performed on the conveyance robot 20 in the conveying system 1 in a more stable state than the first embodiment without being affected by small fluctuations in the communication state.

### [Third embodiment]

In each of the above embodiments, the first threshold value and the second threshold value for classifying the communication quality need to be appropriately set so that the instruction state can be appropriately determined. These threshold values can be appropriate values determined by trial and error in a factory or the like to which the conveying system 1 is applied. However, for this purpose, it is necessary to acquire a large amount of data and modify it appropriately to find the most preferable values.

The third embodiment describes a method that can support determination of such threshold values. In the method of determining the threshold values according to the third embodiment, for various places (factories, warehouses, etc.) to which the conveying system is applied, places with similar communication characteristics are grouped (class determination) as belonging to the same group, and appropriate threshold values are held in advance for each of them. Then, when the conveying system is applied to a new place, the communication characteristics in the place are measured, and the threshold value of the group with the closest characteristics is adopted as the recommended value of the threshold value in the place.

Such grouping (class determination) in the third embodiment is characterized in that various probabilities regarding the parameters used for calculating the communication quality in each of the above embodiments are used as data to be examined. That is, the data to be examined includes the following.

Time series validity probability, which is the ratio of telegrams having no discrepancy in the reception time series to the telegrams within the period. Reliability probability, which is the ratio of telegrams having no error correction by the error correction method to the telegrams within the period. In-time arrival probability, which is the ratio of telegrams, in which the time difference between the time (time series information) of creating the telegram included in the telegram and the reception time of the telegram is within a predetermined time, to the telegrams within the period. Valid radio wave strength probability, which is the ratio of telegrams, in which the radio wave strength of information regarding the radio wave strength of the wireless communication with the control device 10 included in the telegram is equal to or greater than a predetermined value, to the telegrams within the period.

A subspace method can be applied as a method of grouping (class determination). Since this method is a known statistical method, it will be briefly described. First, a vector a(k) having each of the data to be examined (various probabilities) as an element is defined for each period k. Further, an in-system communication value matrix Ad in which n vectors a(k) are arranged is defined for the period k (k is an integer from 1 to n) in which measurement is performed.

The eigenvalue decomposition of the in-system communication value matrix Ad is performed to obtain the eigenvalue λ(k) and the eigenvector x(k). The average value vector b of n vectors a(k) is obtained. The inner product ω(k) of the vector a(k)-b and the eigenvector x(k) is obtained for each k. This inner product ω(k) is called the expansion count of the eigenvector. A vector Ω is derived in which the expansion counts ω(k) of the eigenvectors are arranged up to an appropriate dimension m in descending order of the eigenvalues λ(k). The vector Ω is referred to as an in-system communication feature vector.

The in-system communication feature vector Ω is calculated for various places (factories, warehouses, etc.) to which the conveying system is applied, and is appropriately grouped for each gathering in the space where the in-system communication feature vector Ω exists. By a method such as obtaining the average vector of the in-system communication feature vector Ω for the place belonging to a specific group, the representative in-system communication feature vector Ωg representing the group is calculated.

When the conveying system is applied to a new place, the in-system communication feature vector Ω is calculated in the same manner, and to which group it belongs is determined depending on which group has the closest representative in-system communication feature vector Ωg. The threshold value set to the group is adopted as the recommended threshold value in the conveying system applied to the new place.

The control device according to the third embodiment further includes a threshold value calculation unit that calculates the threshold value by the above-mentioned method, in addition to the configuration of the control device described in the first embodiment with reference to FIG. 2. The threshold value calculation unit holds in advance the representative in-system communication feature vector Ωg of each group and the threshold value, acquires the data to be examined, and calculates the in-system communication feature vector Ω to select the recommended value of the threshold value. According to the third embodiment, the setting of the threshold value for classifying the communication quality can be easily set.

### [Example of implementation by software]

The functional blocks of the control device 10 (particularly, the master communication unit 11, the communication quality determination unit 12, the instruction state determination unit 13, the slave monitoring unit 14, and the instruction generator 15) or the functional blocks of the conveyance robot 20 (particularly, the slave communication unit 21, the telegram generator 22, the inherent state monitoring unit 23, the instruction receiver 24, and the operation controller 25) may be realized by a logic circuit (hardware) formed in an integrated circuit (IC chip) or the like, or may be realized by software.

In the latter case, the control device 10 or the conveyance robot 20 includes a computer that executes instructions of a program that is software for realizing each function. The computer includes, for example, one or more processors and a computer-readable recording medium that stores the program. Then, in the computer, the processor reads the program from the recording medium and executes the program, thereby achieving the object of the present invention.

For example, a CPU (Central Processing Unit) can be used as the processor. A "non-temporary tangible medium," for example, a ROM (Read Only Memory) or the like, a tape, a disk, a card, a semiconductor memory, a programmable logic circuit, etc. can be used as the recording medium. Further, a RAM (Random Access Memory) for developing the program may be further included.

Furthermore, the program may be supplied to the computer via any transmission medium (communication network, broadcast wave, etc.) capable of transmitting the program. One aspect of the present invention can also be realized in the form of a data signal embedded in a carrier wave, in which the above program is embodied by electronic transmission.

### [Summary]

The control device according to one aspect of the present invention is a control device for controlling a conveyance robot. The control device includes: a master communication unit that performs wireless communication with the conveyance robot; a communication quality determination unit that determines quality of the wireless communication based on a communication state of a telegram generated by the conveyance robot, which is received by the master communication unit; and an instruction state determination unit that determines an instruction state regarding whether to transmit an instruction for controlling the conveyance robot depending on the quality of the wireless communication.

According to the above configuration, it is possible to realize the control device of the conveying system that can evaluate the quality of communication between the control device and the conveyance robot in a mode suitable for the conveying system, thereby optimizing the assignment of conveyance instructions.

In the control device according to the one aspect, the telegram may include information regarding the conveyance robot and time series information. The communication quality determination unit may include: a time series determination unit that determines an arrival time series error of the telegram based on the time series information of a plurality of the telegrams from the conveyance robot; a reception success rate calculation unit that calculates a reception success rate of the wireless communication based on at least the number of occurrences of the arrival time series error; and a quality classification unit that classifies the quality of the wireless communication according to the reception success rate.

According to the above configuration, the quality of communication is specifically evaluated by the state of communication performed by the control device and the conveyance robot for control. In addition, such evaluation of communication is excellent as a scale for allowing the control device to appropriately control the conveyance robot, and the control device that can more appropriately assign conveyance instructions can be realized.

In the control device according to the one aspect, the reception success rate calculation unit may further include a configuration that calculates the reception success rate of the wireless communication based on the number of occurrences of error correction of the telegram. According to the above configuration, the quality of communication is specifically evaluated by the state of communication from a plurality of viewpoints performed by the control device and the conveyance robot for control. Therefore, the control device that can more appropriately assign conveyance instructions can be realized.

In the control device according to the one aspect, the quality classification unit may include a configuration that classifies the quality of the wireless communication by reflecting a past value and a current value of the reception success rate. According to the above configuration, the job assignment and instruction can be performed on the conveyance robot in the conveying system without being affected by small fluctuations in the communication state.

In the control device according to the invention, the instruction state includes a configuration that includes: a first state that permits transmission of a command to the conveyance robot; a second state that stands by for transmission of the command to the conveyance robot; and a third state that reassigns and transmits the command transmitted to the conveyance robot to another conveyance robot. According to the above configuration, unnecessary operations in the conveying system, for example, job reassignment is repeated more than required or multiple conveyance robots try to execute duplicate instructions, are suppressed.

A conveying system according to one aspect of the present invention includes: a conveyance robot provided with a telegram generator that generates the telegram and a slave communication unit that performs the wireless communication, and any of the above control devices. According to the above configuration, it is possible to realize the conveying system that can evaluate the quality of communication between the control device and the conveyance robot in a mode suitable for the conveying system, thereby optimizing the assignment of conveyance instructions performed by the control device.

### Reference Signs List

1 Conveying system
10 Control device
11 Master communication unit
12 Communication quality determination unit
121 Time series determination unit
122 Reception determination unit
123 Reception success rate calculation unit
124 Quality classification unit
13 Instruction state determination unit
14 Slave monitoring unit
15 Instruction generator
20 Conveyance robot
21 Slave communication unit
22 Telegram generator
23 Inherent state monitoring unit
24 Instruction receiver
25 Operation controller
26 Mechanism unit
100 Factory

## Claims

1. A control device (10) for controlling a conveyance robot (20), the control device (10) comprising:
a master communication unit (11) configured to perform wireless communication with the conveyance robot (20);
a communication quality determination unit (12) configured to determine quality of the wireless communication based on a communication state of a telegram generated by the conveyance robot (20), which is received by the master communication unit (11);
the control device (10) further comprising:
an instruction state determination unit (13) configured to determine an instruction state regarding whether to transmit an instruction for controlling the conveyance robot (20) depending on the quality of the wireless communication,
**characterized in that** the instruction state comprises:
a first state that permits transmission of a command to the conveyance robot;
a second state that stands by for transmission of the command to the conveyance robot; and
a third state that reassigns and transmits the command transmitted to the conveyance robot to another conveyance robot.

2. The control device (10) according to claim 1, wherein the telegram comprises information regarding the conveyance robot (20) and time series information, and
the communication quality determination unit (12) comprises:
a time series determination unit (121) configured to determine an arrival time series error of the telegram based on the time series information of a plurality of the telegrams from the conveyance robot (20);
a reception success rate calculation unit (123) configured to calculate a reception success rate of the wireless communication based on at least the number of occurrences of the arrival time series error; and
a quality classification unit (124) configured to classify the quality of the wireless communication according to the reception success rate.

3. The control device (10) according to claim 2, wherein the reception success rate calculation unit (123) is further configured to calculate the reception success rate of the wireless communication based on the number of occurrences of error correction of the telegram.

4. The control device (10) according to claim 2 or 3, wherein the quality classification unit (124) is configured to classify the quality of the wireless communication by reflecting a past value and a current value of the reception success rate.

5. A conveying system (1), comprising:
a conveyance robot (20) provided with a telegram generator (22) configured to generate the telegram and a slave communication unit (21) configured to perform the wireless communication; and
the control device (10) according to any one of claims 1 to 4.

## Patentansprüche

1. Steuervorrichtung (10) zum Steuern eines Förderroboters (20), wobei die Steuervorrichtung (10) umfasst:
eine Masterkommunikationseinheit (11), die konfiguriert ist, um eine drahtlose Kommunikation mit dem Förderroboter (20) durchzuführen;
eine Kommunikationsqualitäts-Bestimmungseinheit (12), die konfiguriert ist, um Qualität der drahtlosen Kommunikation basierend auf einem Kommunikationszustand eines Telegramms zu bestimmen, das von dem Förderroboter (20) erzeugt wird, empfangen von der Masterkommunikationseinheit (11);
wobei die Steuervorrichtung (10) ferner umfasst:
eine Befehlszustands-Bestimmungseinheit (13), die konfiguriert ist, um einen Befehlszustand in Bezug darauf zu bestimmen, ob ein Befehl zum Steuern des Förderroboters (20) in Abhängigkeit von der Qualität der drahtlosen Kommunikation übertragen werden soll,
**dadurch gekennzeichnet, dass** der Befehlszustand umfasst:
einen ersten Zustand, der Übertragung eines Befehls an den Förderroboter zulässt;
einen zweiten Zustand, der für Übertragung des Befehls an den Förderroboter bereitsteht; und
einen dritten Zustand, der den Befehl, der an den Förderroboter übertragen wird, einem anderen Förderroboter neu zuweist und überträgt.

2. Steuervorrichtung (10) gemäß Anspruch 1, wobei das Telegramm Informationen bezüglich des Förderroboters (20) und Zeitreiheninformationen umfasst und
die Kommunikationsqualitäts-Bestimmungseinheit (12) umfasst:
eine Zeitreihen-Bestimmungseinheit (121), die konfiguriert ist, um einen Ankunftszeitreihenfehler des Telegramms basierend auf der Zeitreiheninformation einer Vielzahl von Telegrammen von dem Förderroboter (20) zu bestimmen;
eine Empfangserfolgsraten-Berechnungseinheit (123), die konfiguriert ist, um eine Empfangserfolgsrate der drahtlosen Kommunikation basierend auf wenigstens der Anzahl von Vorkommnissen des Ankunftszeitreihenfehlers zu berechnen; und
eine Qualitätsklassifizierungseinheit (124), die konfiguriert ist, um die Qualität der drahtlosen Kommunikation gemäß der Empfangserfolgsrate zu klassifizieren.

3. Steuervorrichtung (10) gemäß Anspruch 2, wobei die Empfangserfolgsraten-Berechnungseinheit (123) ferner konfiguriert ist, um die Empfangserfolgsrate der drahtlosen Kommunikation basierend auf der Anzahl von Vorkommnissen einer Fehlerkorrektur des Telegramms zu berechnen.

4. Steuervorrichtung (10) gemäß Anspruch 2 oder 3, wobei die
Qualitätsklassifizierungseinheit (124) konfiguriert ist, um die Qualität der drahtlosen Kommunikation zu klassifizieren, indem sie einen vergangenen Wert und einen aktuellen Wert der Empfangserfolgsrate wiedergibt.

5. Fördersystem (1), umfassend:
einen Förderroboter (20), der mit einem Telegrammgenerator (22), der konfiguriert ist, um das Telegramm zu erzeugen, und einer Slave-Kommunikationseinheit (21), die konfiguriert ist, um die drahtlose Kommunikation durchzuführen, bereitgestellt wird; und
die Steuervorrichtung (10) gemäß einem der Ansprüche 1 bis 4.

## Revendications

1. Dispositif de commande (10) pour commander un robot de transport (20), le dispositif de commande (10) comprenant :
une unité de communication maître (11) configurée pour réaliser une communication sans fil avec le robot de transport (20) ;
une unité de détermination de qualité de communication (12) configurée pour déterminer une qualité de la communication sans fil sur la base d'un état de communication d'un télégramme généré par le robot de transport (20), qui est reçu par l'unité de communication maître (11) ;
le dispositif de commande (10) comprenant en outre :
une unité de détermination d'état d'instruction (13) configurée pour déterminer un état d'instruction indiquant s'il faut ou non transmettre une instruction pour commander le robot de transport (20) en fonction de la qualité de la communication sans fil,
**caractérisé en ce que** l'état d'instruction comprend :
un premier état qui permet une transmission d'un ordre au robot de transport ;
un deuxième état qui attend pendant une transmission de l'ordre au robot de transport ; et
un troisième état qui réattribue et transmet l'ordre transmis au robot de transport à un autre robot de transport.

2. Dispositif de commande (10) selon la revendication 1, dans lequel le télégramme comprend des informations relatives au robot de transport (20) et des informations de série de temps, et
l'unité de détermination de qualité de communication (12) comprend :
une unité de détermination de série de temps (121) configurée pour déterminer une erreur de série de temps d'arrivée du télégramme sur la base des informations de série de temps d'une pluralité des télégrammes émanant du robot de transport (20) ;
une unité de calcul de taux de réussite de réception (123) configurée pour calculer un taux de réussite de réception de la communication sans fil sur la base au moins du nombre d'occurrences de l'erreur de série de temps d'arrivée ; et
une unité de classification de qualité (124) configurée pour classer la qualité de la communication sans fil selon le taux de réussite de réception.

3. Dispositif de commande (10) selon la revendication 2, dans lequel l'unité de calcul de taux de réussite de réception (123) est en outre configurée pour calculer le taux de réussite de réception de la communication sans fil sur la base du nombre d'occurrences de correction d'erreur du télégramme.

4. Dispositif de commande (10) selon la revendication 2 ou 3, dans lequel l'unité de classification de qualité (124) est configurée pour classer la qualité de la communication sans fil en reflétant une valeur antérieure et une valeur actuelle du taux de réussite de réception.

5. Système de transport (1), comprenant :
un robot de transport (20) pourvu d'un générateur de télégramme (22) configuré pour générer le télégramme et d'une unité de communication esclave (21) configurée pour réaliser la communication sans fil ; et
le dispositif de commande (10) selon l'une quelconque des revendications 1 à 4.
